# EUROPÄISCHE PATENTSCHRIFT

(11) **EP 2 899 798 B1**
(45) Veröffentlichungstag und Bekanntmachung des Hinweises auf die Patenterteilung: **29.03.2017**
(21) Anmeldenummer: 14003892.8
(22) Anmeldetag: 19.11.2014
(51) Int. Cl.: H01M 10/6557, H01M 10/613

(54) **Batteriesystem für ein Kraftfahrzeug**
Battery system for a motor vehicle
Système de batterie pour véhicule automobile

(30) Priorität: 22.01.2014 DE 102014000806
(43) Veröffentlichungstag der Anmeldung: 29.07.2015
(73) Patentinhaber: MAN Truck & Bus AG, 80995 München (DE)
(72) Erfinder: Braun, Reimar, 81735 München (DE); Acebes, Juan Blanco, 80805 München (DE)
(74) Vertreter: v. Bezold & Partner Patentanwälte - PartG mbB

(56) Entgegenhaltungen:
- DE-A1-102010 011 983
- US-A1- 2013 029 193

## Beschreibung

Die Erfindung betrifft ein Batteriesystem für ein Kraftfahrzeug, vorzugsweise ein Nutzfahrzeug, insbesondere einen Lastkraftwagen oder einen Omnibus.

DE 10 2010 011 983 A1 offenbart ein Batteriegehäuse mit einem Deckelement zur Verbindung mit einem Zellenfachelement und mit Temperiermediumsventilen. Zum Stand der Technik kann ebenfalls auf die US 2013/0029193 A1 verwiesen werden.

Aus der DE 10 2008 011 466 A1 ist ein Batteriesystem für ein Kraftfahrzeug bekannt. Das Batteriesystem umfasst ein Gehäuse, in dem Batterien angeordnet sind. Das Gehäuse weist eine Einlassöffnung zum Einleiten von Kühlluft in das Gehäuse und eine Auslassöffnung zum Ausleiten der Kühlluft aus dem Gehäuse auf. Die Kühlung der in dem Gehäuse angeordneten Batterien erfolgt, indem die Kühlluft durch das Gehäuse hindurchgeführt wird. Nachteilhaft daran ist, dass die Batterien in dem Gehäuse relativ unspezifisch gekühlt werden. Nachteilhaft ist ferner, dass die Batterien relativ weit voneinander zu beabstanden sind, damit ausreichend Kühlluft zur Kühlung dazwischen durchströmen kann, was in der Folge zu dem Erfordernis eines relativ großen Gehäuses führt.

Eine Aufgabe der Erfindung ist es, ein verbessertes und/oder alternatives Batteriesystem für ein Kraftfahrzeug, insbesondere ein Nutzfahrzeug, zu schaffen.

Diese Aufgabe kann mit den Merkmalen des unabhängigen Anspruchs gelöst werden. Vorteilhafte Weiterbildungen der Erfindung können den Unteransprüchen und der folgenden Beschreibung entnommen werden.

Die Erfindung schafft ein Batteriesystem für ein Kraftfahrzeug, vorzugsweise ein Nutzfahrzeug, insbesondere einen Lastkraftwagen oder einen Omnibus. Das Batteriesystem umfasst hintereinander, nebeneinander und/oder übereinander angeordnete, z. B. parallel verschaltete, Batteriemodule.

Das Batteriesystem umfasst ferner zumindest zwei separate Zuführleitungen zum Zuführen von Kühlfluid (insbesondere Kühlflüssigkeit) an zumindest zwei zweckmäßig separate Kühlelemente (z. B. Kühlplatten) zur Kühlung der Batteriemodule. Das Batteriesystem umfasst außerdem eine Verteilerleitung, die zweckmäßig eingangsseitig über einen Zuführkanal mit einem Kühlmodul in Verbindung steht und zur gemeinsamen Versorgung der Zuführleitungen mit Kühlfluid aus dem Kühlmodul dient. Das Batteriesystem umfasst des Weiteren Steuermittel (z. B. Ventile) zur Beeinflussung der einzelnen Kühlfluid-Volumenströme zu den Kühlelementen. Alternativ oder ergänzend kann das Batteriesystem zumindest zwei separate Abführleitungen zum Abführen von Kühlfluid aus den zumindest zwei zweckmäßig separaten Kühlelementen und eine Sammelleitung umfassen. Die Sammelleitung ist mit den Abführleitungen verbunden und dient zum Sammeln des Kühlfluids aus den Abführleitungen und zum Weiterleiten des Kühlfluids zweckmäßig über einen Abführkanal an das Kühlmodul. Ferner können Steuermittel (z. B. Ventile) zur Beeinflussung der einzelnen Kühlfluid-Volumenströme aus den Kühlelementen vorgesehen sein.

Die zumindest zwei separaten Zuführleitungen münden zweckmäßig jeweils in ein Kühlelement oder sind jeweils an ein Kühlelement angeschlossen.

Ein Vorteil des erfindungsgemäßen Batteriesystems besteht darin, dass die zumindest zwei Kühlelemente individuell und/oder unabhängig voneinander gekühlt werden können. Das kann z. B. deshalb erforderlich werden, weil sich unterschiedliche Batteriemodule unterschiedlich erwärmen können und somit eine individuelle und/oder voneinander unabhängige Kühlung vorteilhaft ist, um die Batteriemodule auf dem im Wesentlichen gleichen oder einem vorbestimmten Temperaturniveau betreiben zu können. Dadurch kann insbesondere eine im Wesentlichen gleichmäßige Alterung der Batteriemodule gewährleistet werden.

Die Steuermittel zur Beeinflussung des Kühlfluid-Volumenstroms zu den Kühlelementen sind vorzugsweise in den Zuführleitungen und/oder der Verteilerleitung angeordnet. Vorzugsweise ist jeweils ein Steuermittel in jeweils einer Zuführleitung angeordnet.

Die Steuermittel zur Beeinflussung des Kühlfluid-Volumenstroms aus den Abführleitungen sind vorzugsweise in den Abführleitungen und/oder der Sammelleitung angeordnet. Vorzugsweise ist jeweils ein Steuermittel in jeweils einer Abführleitung angeordnet.

Es ist möglich, dass die Batteriemodule und die Kühlelemente in einem gemeinsamen Gehäuse untergebracht sind.

Das Gehäuse weist zweckmäßig Ein- und Auslässe für die Zuführ- und Abführleitungen auf.

Es ist möglich, dass die Zuführleitungen auf der dem Kühlmodul zugewandten Seite an die Kühlelemente anschließen und/oder die Abführleitungen auf der dem Kühlmodul zugewandten Seite an die Kühlelemente anschließen.

Des Weiteren können die Zuführleitungen auf der dem Kühlmodul abgewandten Seite an die Kühlelemente anschließen und/oder die Abführleitungen auf der dem Kühlmodul abgewandten Seite an die Kühlelemente anschließen.

Die Zuführleitungen münden vorzugsweise im Wesentlichen geradlinig in die Kühlelemente. Die Zuführleitungen erstrecken sich vorzugsweise zwischen der Verteilerleitung und den Kühlelementen geradlinig. Dadurch kann eine laminare Kühlfluidströmung zu den Kühlelementen gewährleistet werden. Eine turbulente Strömung erfolgt zweckmäßig erst mit oder nach Eintritt in die Kühlelemente.

Zumindest eines der zuvor genannten Steuermittel kann zur Veränderung des Kühlfluid-Volumenstroms manuell einstellbar sein, mit im Betrieb konstanter Kühlfluid-Durchlassöffnung. Alternativ oder ergänzend kann zumindest eines der zuvor genannten Steuermittel mittels einer Steuereinrichtung während des Betriebs des Batteriesystems ansteuerbar sein, mit im Betrieb des Batteriesystems veränderbarer Kühlfluid-Durchlassöffnung.

Es ist möglich, dass die einzelnen Kühlelemente jeweils von einer eigenen Zuführleitung mit Kühlfluid versorgt werden, so dass die einzelnen Kühlelemente individuell und/oder unabhängig voneinander mit Kühlfluid versorgt werden können. Alternativ oder ergänzend kann von den einzelnen Kühlelementen jeweils eine eigene Abführleitung abgehen, so dass die Kühlfluidausfuhr aus den einzelnen Kühlelementen individuell und/oder unabhängig voneinander erfolgen kann.

Die Zuführleitungen und vorzugsweise die Verteilerleitung und/oder die Abführleitungen und vorzugsweise die Sammelleitung können zweckmäßig in einem Gehäuse untergebracht sein, das mit Masse verbunden bzw. geerdet ist. Dadurch kann eine galvanische oder elektrische Trennung zwischen dem Kühlmodul und den Batteriemodulen geschaffen werden.

Zumindest eines der zuvor genannten Steuermittel ist mittels einer Steuereinheit zum Steuern der Steuermittel schließbar, wenn eine Kühlfluid-Leckage festgestellt wird, so dass das Kühlfluid in einem oder mehreren Kühlelementen gehalten werden kann. Dadurch kann ein rasches Erwärmen des oder der Batteriemodule vermieden werden.

Ebenso kann zumindest eines der zuvor genannten Steuermittel zusätzlich eine Luftablassfunktion aufweisen, oder aber kann das Batteriesystem eine eigene Luftablasseinrichtung, z. B. ein Luftablassventil, aufweisen.

Das Batteriesystem ist vorzugsweise zur Montage an einen Leiterrahmen (z. B. einen Längsoder Querträger) eines Nutzfahrzeugs ausgeführt. Zu diesem Zweck können das Gehäuse, die Zuführleitungen, die Verteilerleitung, die Abführleitungen, die Sammelleitung und/oder
das Kühlmodul mit einer Befestigungseinrichtung zum Befestigen an den Leiterrahmen ausgestattet sein. Der Leiterrahmen kann somit als vorzugsweise außenliegender Crash-Schutz für das Batteriesystem dienen.

Die Kühlelemente sind vorzugsweise Kühlplatten, die zweckmäßig zwischen den Batteriemodulen angeordnet sind.

Es ist möglich, dass sich die Zuführleitungen und die Abführleitungen parallel erstrecken. Alternativ oder ergänzend können sich die einzelnen Zuführleitungen und/oder die einzelnen Abführleitungen parallel zueinander erstrecken.

Es ist möglich, dass die Verteilerleitung und die Sammelleitung parallel zueinander angeordnet sind.

Ebenso ist es möglich, dass die Verteilerleitung und/oder die Sammelleitung schräg, vorzugsweise im Wesentlichen rechtwinklig zu den Zuführleitungen und/oder den Abführleitungen, verläuft.

Zu erwähnen ist, dass die Verteilerleitung eingangsseitig von vorzugsweise nur einem einzigen Zuführkanal mit Kühlfluid versorgt wird.

Zu erwähnen ist ferner, dass von der Sammelleitung ausgangsseitig vorzugsweise nur ein einziger Abführkanal zum Weiterleiten des Kühlfluids an das Kühlmodul abgeht.

Zu erwähnen ist des Weiteren, dass das Kühlmodul zweckmäßig zum Kühlen des Kühlfluids dient und/oder einen Verdichter (z. B. eine Pumpe) zum Zirkulieren des Kühlfluids durch das Batteriesystem aufweist. Darüber hinaus kann das Kühlmodul optional eine Heizeinrichtung zum Erwärmen des Kühlfluids aufweisen.

Das Merkmal "Kühlen" (z. B. Kühlfluid, Kühlelemente, Kühlung, etc.) ist im Rahmen der Erfindung breit auszulegen und kann folglich vorzugsweise allgemein ein "Temperieren" (Temperaturerhöhung und/oder Temperaturreduzierung des Kühlfluids) umfassen.

Zu erwähnen ist ferner, dass die "Leitungen" (Zuführleitungen, Verteilerleitung, Abführleitungen und/oder Sammelleitung) vorzugsweise als (zweckmäßig formstabile) Rohre ausgeführt sind, aber auch als flexible Schläuche ausgeführt sein können.

Die "Leitungen" (Zuführleitungen, Verteilerleitung, Abführleitungen und/oder Sammelleitung) können z. B. aus elektrisch nicht leitendem Kunststoff ausgebildet sein, um eine elektrische oder galvanische Trennung zwischen den Batteriemodulen und dem Kühlmodul schaffen zu können.

Zu erwähnen ist darüber hinaus, dass im Rahmen der Erfindung das Merkmal "Steuern" breit auszulegen ist und zweckmäßig auch ein "Regeln" umfassen kann.

Als Kühlfluid dient vorzugsweise eine Kühlflüssigkeit, z.B. ein Wasser-Glykol-Gemisch.

Die Erfindung ist nicht auf ein Batteriesystem beschränkt, sondern umfasst auch ein Kraftfahrzeug, vorzugsweise ein Nutzfahrzeug, z. B. einen Lastkraftwagen oder einem Omnibus mit einem Batteriesystem, wie hierin beschrieben. Das Kraftfahrzeug ist vorzugsweise ein Hybrid-Kraftfahrzeug.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische, explosionsartige Ansicht eines Batteriesystems gemäß einer Ausführungsform der Erfindung,
- Figur 2: zeigt eine perspektivische Ansicht eines Gehäuses mit Batteriemodulen und Kühlelementen für das Batteriesystem gemäß Figur 1, und
- Figur 3: zeigt eine perspektivische, explosionsartige Ansicht eines Batteriesystems gemäß einer anderen Ausführungsform der Erfindung.

Die in den Figuren gezeigten Ausführungsformen stimmen teilweise überein, wobei gleiche oder ähnliche Teile mit den gleichen Bezugszeichen versehen sind und zu deren Erläuterung auch auf die Beschreibung der anderen Ausführungsform verwiesen wird, um Wiederholungen zu vermeiden.

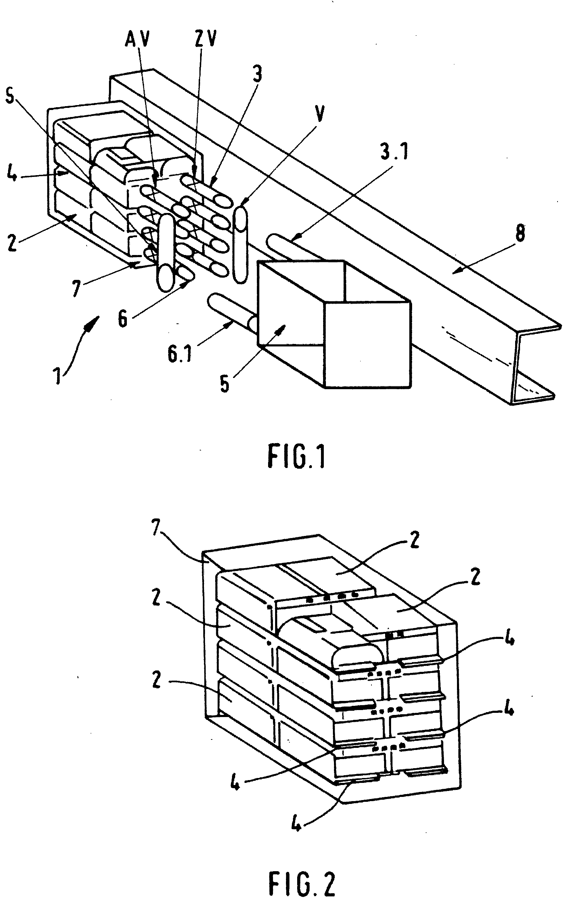

Figur 1 zeigt eine perspektivische, explosionsartige Ansicht eines Batteriesystems 1 für ein Kraftfahrzeug gemäß einer Ausführungsform der Erfindung.

Das Batteriesystem 1 umfasst 15 parallel verschaltete Batteriemodule 2 und vier Kühlelemente 4 (Kühlplatten) zum Kühlen der Batteriemodule 2. Das Batteriesystem 1 umfasst ferner vier separate Zuführleitungen 3, die jeweils in ein Kühlelement 4 münden und zum Zuführen von Kühlfluid an die Kühlelemente 4 dienen. Zu Darstellungszwecken sind nur ein Batteriemodul mit dem Bezugszeichen 2, nur eine Zuführleitung mit dem Bezugszeichen 3 und nur ein Kühlelement mit dem Bezugszeichen 4 versehen. Eine als Diffusor wirkende Verteilerleitung V ist mit einem Kühlmodul 5 verbunden. Das Kühlmodul 5 dient zum Kühlen des Kühlfluids und zum Zirkulieren des Kühlfluids durch das Batteriesystem 1 (Pumpen- und Kühlfunktion). Die Verteilerleitung V dient zur gemeinsamen Versorgung der Zuführleitungen 3 mit Kühlfluid aus dem Kühlmodul 5. Die Verteilerleitung V wird eingangsseitig von einem einzigen Zuführkanal 3.1 mit Kühlfluid aus dem Kühlmodul 5 versorgt.

Die einzelnen Zuführleitungen 3 sind jeweils mit einem Steuermittel ZV zur Beeinflussung des Kühlfluid-Volumenstroms zu den Kühlelementen 4 ausgestattet. Zu Darstellungszwekken ist nur ein Steuermittel mit dem Bezugszeichen ZV versehen. Die Steuermittel ZV sind zweckmäßig als Ventile ausgeführt.

Das Batteriesystem 1 umfasst ferner vier Abführleitungen 6 zum Abführen des Kühlfluids aus den Kühlelementen 4. Eine Sammelleitung S ist mit den Abführleitungen 6 verbunden und dient zum Sammeln des Kühlfluids aus den Abführleitungen 6 und zum Weiterleiten desselben an das Kühlmodul 5. Ein Abführkanal 6.1 erstreckt sich ausgangsseitig von der Sammelleitung S und mündet in das Kühlmodul 5. Die einzelnen Abführleitungen 6 sind jeweils mit einem Steuermittel AV zur Beeinflussung des Kühlfluid-Volumenstroms aus den Kühlelementen 4 ausgestattet. Zu Darstellungszwecken sind nur eine Abführleitung mit dem Bezugszeichen 6 und nur ein Steuermittel mit dem Bezugszeichen AV versehen.

Mittels den separaten Zuführleitungen 3 und den zugehörigen Steuermitteln ZV und den separaten Abführleitungen 6 und den zugehörigen Steuermitteln AV kann eine spezifische, individuelle Temperierung der Batteriemodule 2 ermöglicht werden.

Die Verteilerleitung V ist eine eigene Baueinheit, die einerseits mit dem Kühlmodul 5 und andererseits mit den Kühlelementen 4 in Wirkverbindung steht. Das gilt zweckmäßig ebenso für die Sammelleitung S.

Die Zuführleitungen 3, die Verteilerleitung V, die Abführleitungen 6 und die Sammelleitung S sind als formstabile Rohre ausgeführt.

Die Batteriemodule 2 und die Kühlelemente 4 sind in einem gemeinsamen Gehäuse 7 untergebracht. Das Gehäuse 7 weist vier Einlässe für die vier Zuführleitungen 3 auf und vier Auslässe für die vier Abführleitungen 6.

Das Gehäuse 7 mit den integrierten Batteriemodulen 2 und den integrierten Kühlelementen 4 ist modulartig ausgeführt. Ebenso ist das Kühlmodul 5 und vorzugsweise auch das Leitungssystem zwischen dem Kühlmodul 5 und dem Gehäuse 7 modulartig ausgeführt. Das Gehäuse 7, das Kühlmodul 5 und zweckmäßig auch das Leitungssystem zwischen dem Kühlmodul 5 und dem Gehäuse 7 sind mit Befestigungseinrichtungen zum Befestigen an einen Leiterrahmen 8, z. B. einen Längs- oder Querträger eines Nutzfahrzeugs, ausgestattet.

Bei der in Figur 1 gezeigten Ausführungsform schließen die Zuführleitungen 3 auf der dem Kühlmodul 5 zugewandten Seite an die Kühlelemente 4 und/oder das Gehäuse 7 an. Ebenso schließen die Abführleitungen 6 an der dem Kühlmodul 5 zugewandten Seite an die Kühlelemente 4 und/oder das Gehäuse 7 an.

Die Zuführleitungen 3 erstrecken sich parallel zueinander und münden geradlinig in die Kühlelemente 4. Die Verteilerleitung V erstreckt sich im Wesentlichen rechtwinklig zu den Zuführleitungen 3.

Die Abführleitungen 6 erstrecken sich parallel zueinander und münden zweckmäßig geradlinig in die Sammelleitung S. Die Sammelleitung S erstreckt sich rechtwinklig zu den Abführleitungen 6.

Die Steuermittel ZV, AV können manuell einstellbar sein, also quasi vor der Inbetriebnahme des Batteriesystems 1 manuell eingestellt werden, um deren Kühlfluid-Durchflussöffnung zu verändern, so dass im Betrieb des Batteriesystems 1 konstante Kühlfluid-Durchlassöffnungen vorliegen.

Die Steuermittel ZV, AV können aber auch z. B. elektrisch steuerbar sein, also mittels einer Steuereinrichtung während des Betriebs des Batteriesystems 1 angesteuert werden, so dass im Betrieb des Batteriesystems 1 veränderbare Kühlfluid-Durchlassöffnungen ermöglicht werden und dadurch die Steuermittel ZV, AV z. B. vollständig geöffnet, vollständig geschlossen oder teilweise geöffnet werden können.

In der in Figur 1 gezeigten Ausführungsform sind 15 Batteriemodule 2 vorgesehen, die von vier Kühlelementen 4 gekühlt werden.

Es ist allerdings ebenso möglich, dass die einzelnen Kühlelemente 4 jeweils von einer eigenen Zuführleitung 3 mit Kühlfluid versorgt werden, so dass die einzelnen Kühlelemente 4 unabhängig voneinander mit Kühlfluid versorgt werden können. Daraus folgt, dass für z. B. acht Batteriemodule 2 acht Kühlelemente 4 vorgesehen werden, wobei die acht Kühlelemente 4 von acht Zuführleitungen 3 mit Kühlfluid versorgt werden. Natürlich ist es ebenfalls möglich, mittels z. B. jeweils eines Kühlelements 4 z. B. zumindest zwei Batteriemodule 2 zu kühlen.

Im Rahmen der Erfindung kann folglich ein Kühlelement 4 nebst einer Zuführleitung 3 pro Lage an Batteriemodulen 2 oder ein Kühlelement 4 nebst einer Zuführleitung 3 pro Batteriemodul 2 oder pro Paar Batteriemodule 2 vorgesehen sein.

Das Batteriesystem 1 umfasst ferner zumindest eine nicht gezeigte Erfassungseinrichtung, z. B. einen oder mehrere Sensoren, mittels derer eine Kühlfluid-Leckage festgestellt werden kann. Eine ebenfalls nicht gezeigte Steuereinrichtung kann in Abhängigkeit von der erfassten Kühlfluid-Leckage gezielt eines oder mehrere der Steuermittel ZV, AV schließen, so dass das Kühlfluid in dem oder den zugehörigen Kühlelementen 4 verbleibt. Dadurch kann ein rasches Abkühlen zumindest eines Kühlelements 4 trotz Kühlfluidverlust vermieden werden.

Als Kühlfluid dient zweckmäßig eine Kühlflüssigkeit. Da sich in der Kühlflüssigkeit Luft ansammeln kann, kann zumindest eines der Steuermittel ZV, AV mit einer Luftablassfunktion zum Ablassen der Luft ausgestattet sein. Alternativ oder ergänzend kann zu diesem Zweck auch eine eigens vorgesehen Luftablasseinrichtung, z. B. ein Luftablassventil, vorgesehen werden.

Zu erwähnen ist noch, dass die Zuführleitungen 3, die Abführleitungen 6, die Verteilerleitung V und die Sammelleitung S zumindest abschnittsweise in einem nicht gezeigten Gehäuse untergebracht sein können und das Gehäuse mit Masse verbunden ist, um eine elektrische Trennung zwischen den Batteriemodulen 2 einerseits und dem Kühlmodul 5 andererseits zu schaffen.

Figur 2 zeigt eine vergrößerte Ansicht des Gehäuses 7 aus Figur 1, mit den integrierten Batteriemodulen 2 und den integrierten Kühlelementen 4. Aus Figur 2 ergibt sich, dass unter den unteren Batteriemodulen 2 zwei Kühlelemente 4 angeordnet sind und in Höhenrichtung zwischen den verbleibenden Batteriemodulen 2 stets zwei horizontal ausgerichtete Kühlelemente 4 angeordnet sind.

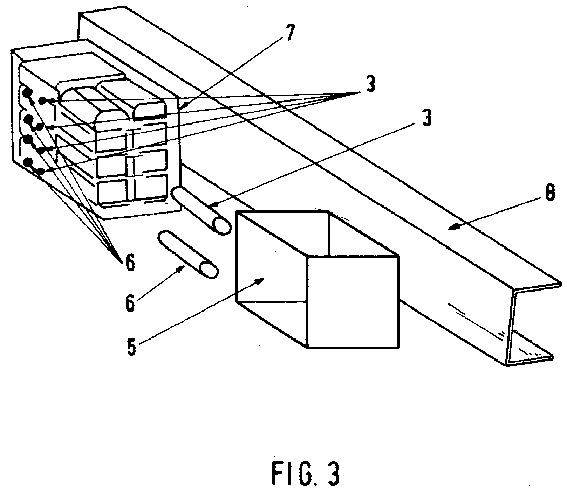

Figur 3 zeigt eine perspektivische, schematische, explosionsartige Ansicht eines Batteriesystems 1 gemäß einer anderen Ausführungsform der Erfindung.

Eine Besonderheit des in Figur 3 gezeigten Batteriesystems 1 ist, dass die Zuführleitungen 3 auf der dem Kühlmodul 5 abgewandten Seite an die Kühlelemente 4 und/oder das Gehäuse 7 anschließen. Ebenso schließen die Abführleitungen 6 an der dem Kühlmodul 5 abgewandten Seite an die Kühlelemente 4 und/oder das Gehäuse 7 an. Das Kühlfluid wird somit auf der dem Kühlmodul 5 abgewandten Seite und somit quasi von hinten in die Kühlelemente 4 und/oder das Gehäuse 7 eingeführt und ebenso daraus abgeführt.

Das in Figur 3 gezeigte Batteriesystem 1 ist ebenso mit einer Verteilerleitung V und einer Sammelleitung S ausgestattet, wobei diese zu Darstellungszwecken in Figur 3 nicht gezeigt sind.

Zu erwähnen ist nochmals, dass im Rahmen der Erfindung das Merkmal "Kühlen" breit auszulegen ist und zweckmäßig allgemein ein Temperieren, z. B. Reduzierung und/oder Erhöhung der Temperatur, des Kühlfluids umfassen kann.

Die Erfindung ist nicht auf die oben beschriebenen bevorzugten Ausführungsformen beschränkt. Vielmehr ist eine Vielzahl von Varianten und Anwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche, unabhängig von den in Bezug genommenen Merkmalen und Ansprüchen.

### Bezugszeichenliste

- 1: Batteriesystem
- 2: Batteriemodule
- 3: Zuführleitungen
- 3.1: Zuführkanal
- 4: Kühlelemente
- 5: Kühlmodul
- 6: Abführleitungen
- 6.1: Abführkanal
- 7: Gehäuse
- 8: Leiterrahmen
- S: Sammelleitung
- V: Verteilerleitung
- AV: Steuermittel
- ZV: Steuermittel

## Patentansprüche

1. Batteriesystem (1) für ein Kraftfahrzeug, mit hintereinander, nebeneinander und/oder übereinander angeordneten, vorzugsweise parallel verschalteten Batteriemodulen (2) und
- zumindest zwei separaten Zuführleitungen (3) zum Zuführen von Kühlfluid an zumindest zwei Kühlelemente (4) zur Kühlung der Batteriemodule (2) und einer Verteilerleitung (V), die mit einem Kühlmodul (5) verbunden ist und zur gemeinsamen Versorgung der Zuführleitungen (3) mit Kühlfluid aus dem Kühlmodul (5) dient, und Steuermitteln (ZV) zur Beeinflussung der Kühlfluid-Volumenströme zu den Kühlelementen (4), und/oder
- zumindest zwei separaten Abführleitungen (6) zum Abführen von Kühlfluid aus den zumindest zwei Kühlelementen (4) und einer Sammelleitung (S), die mit den Abführleitungen (6) verbunden ist und zum Sammeln des Kühlfluids aus den Abführleitungen (6) und zum Weiterleiten desselben an das Kühlmodul (5) dient, und Steuermitteln (AV) zur Beeinflussung der Kühlfluid-Volumenströme aus den Kühlelementen (4), und
- zumindest ein Steuermittel (ZV, AV) mittels einer Steuereinheit zum Steuern der Steuermittel (ZV, AV) geschlossen wird, wenn eine Kühlfluid-Leakage festgestellt wird, so dass das Kühlfluid in zumindest einem Kühlelement (4) gehalten werden kann.

2. Batteriesystem (1) nach Anspruch 1, wobei die Steuermittel (ZV) zur Beeinflussung der Kühlfluid-Volumenströme zu den Kühlelementen (4) in den Zuführleitungen (3) oder der Verteilerleitung (V) angeordnet sind.

3. Batteriesystem (1) nach Anspruch 1 oder 2, wobei die Steuermittel (AV) zur Beeinflussung der Kühlfluid-Volumenströme aus den Kühlelementen (4) in den Abführleitungen (6) oder der Sammelleitung (S) angeordnet sind.

4. Batteriesystem (1) nach einem der vorhergehenden Ansprüche, wobei die Batteriemodule (2) und die Kühlelemente (4) in einem gemeinsamen Gehäuse (7) untergebracht sind und das Gehäuse (7) vorzugsweise Ein- und Auslässe für die Zuführ- (3) und Abführleitungen (6) aufweist.

5. Batteriesystem (1) nach einem der vorhergehenden Ansprüche, wobei die Zuführleitungen (3) auf der dem Kühlmodul (5) zugewandten Seite zu den Kühlelementen (4) hin geführt sind und/oder die Abführleitungen (6) an der dem Kühlmodul (5) zugewandten Seite von den Kühlelementen (4) weg geführt sind.

6. Batteriesystem (1) nach einem der vorhergehenden Ansprüche, wobei die Zuführleitungen (3) auf der dem Kühlmodul (5) abgewandten Seite zu den Kühlelementen (4) hin geführt sind und/oder die Abführleitungen (6) auf der dem Kühlmodul (5) abgewandten Seite von den Kühlelementen (4) weg geführt sind.

7. Batteriesystem (1) nach einem der vorhergehenden Ansprüche, wobei die Zuführleitungen (3) geradlinig in die Kühlelemente (4) münden und/oder die Zuführleitungen (3) sich zwischen der Sammelleitung (S) und den Kühlelementen (4) geradlinig erstrecken.

8. Batteriesystem (1) nach einem der vorhergehenden Ansprüche, wobei zumindest ein Steuermittel (ZV, AV) manuell einstellbar ist mit im Betrieb konstanter Kühlfluid-Durchlassöffnung und/oder zumindest ein Steuermittel (ZV, AV) steuerbar ist mit im Betrieb veränderbarer Kühlfluid-Durchlassöffnung.

9. Batteriesystem (1) nach einem der vorhergehenden Ansprüche, wobei die einzelnen Kühlelemente (4) jeweils von einer eigenen Zuführleitung (3) mit Kühlfluid versorgt werden, so dass die einzelnen Kühlelemente (4) individuell und/oder unabhängig voneinander mit Kühlfluid versorgbar sind.

10. Batteriesystem (1) nach einem der vorhergehenden Ansprüche, wobei von den einzelnen Kühlelementen (4) jeweils eine eigene Abführleitung (6) abgeht, so dass die Kühlfluidausfuhr aus den einzelnen Kühlelementen (4) individuell und/oder unabhängig voneinander erfolgt.

11. Batteriesystem (1) nach einem der vorhergehenden Ansprüche, wobei die Zuführleitungen (3) und die Verteilerleitung (V) und/oder die Abführleitungen (6) und die Sammelleitung (S) in einem mit Masse verbundenen Gehäuse untergebracht sind, zur elektrischen Trennung des Kühlmoduls (5) von den Batteriemodulen (2).

12. Batteriesystem (1) nach einem der vorhergehenden Ansprüche, wobei zumindest ein Steuermittel (ZV, AV) zusätzlich eine Luftablassfunktion aufweist und/oder das Batteriesystem (1) eine Luftablasseinrichtung aufweist.

13. Batteriesystem (1) nach einem der vorhergehenden Ansprüche, wobei zumindest eines von folgenden eine Befestigungseinrichtung zum Befestigen an einen Leiterrahmen (8) eines Nutzfahrzeugs aufweist:
- das Gehäuse (7),
- die Zuführleitungen (3),
- die Verteilerleitung (V),
- die Abführleitungen (6),
- die Sammelleitung (S),
- das Kühlmodul (5).

14. Batteriesystem (1) nach einem der vorhergehenden Ansprüche, wobei die Kühlelemente (4) Kühlplatten sind und zwischen den Batteriemodulen (2) angeordnet sind.

15. Kraftfahrzeug, vorzugsweise Nutzfahrzeug, mit einem Batteriesystem (1) nach einem der vorhergehenden Ansprüche.

## Claims

1. Battery system (1) for a motor vehicle, having battery modules (2) which are arranged one behind the other, one next to the other and/or one on top of the other and preferably connected in parallel, and
- at least two separate feed lines (3) for feeding in cooling fluid to at least two cooling elements (4) for cooling the battery modules (2) and a distributor line (V) which is connected to a cooling module (5) and serves to supply the feed lines (3) jointly with cooling fluid from the cooling module (5), and control means (ZV) for influencing the cooling fluid volume flows to the cooling elements (4), and/or
- at least two separate discharge lines (6) for discharging cooling fluid from the at least two cooling elements (4) and a collecting line (S) which is connected to the discharge lines (6) and serves to collect the cooling fluid from the discharge lines (6) and to pass it on to the cooling module (5), and control means (AV) for influencing the cooling fluid volume flows from the cooling elements (4), and
- at least one control means (ZV, AV) is closed by means of a control unit for controlling the control means (ZV, AV) if a cooling fluid leak is detected, so that the cooling fluid can therefore be held in at least one cooling element (4).

2. Battery system (1) according to Claim 1, wherein the control means (ZV) for influencing the cooling fluid volume flows to the cooling elements (4) are arranged in the feed lines (3) or the distributor line (V).

3. Battery system (1) according to Claim 1 or 2, wherein the control means (AV) for influencing the cooling fluid volume flows from the cooling elements (4) are arranged in the discharge lines (6) or the collecting line (S).

4. Battery system (1) according to one of the preceding claims, wherein the battery modules (2) and the cooling elements (4) are accommodated in a common housing (7), and the housing (7) preferably has inlets and outlets for the feed lines (3) and discharge lines (6).

5. Battery system (1) according to one of the preceding claims, wherein the feed lines (3) are led to the cooling elements (4) on the side facing the cooling module (5), and/or the discharge lines (6) are led away from the cooling elements (4) on the side facing the cooling module (5).

6. Battery system (1) according to one of the preceding claims, wherein the feed lines (3) are led to the cooling elements (4) on the side facing away from the cooling module (5), and/or the discharge lines (6) are led away from the cooling elements (4) on the side facing away from the cooling module (5).

7. Battery system (1) according to one of the preceding claims, wherein the feed lines (3) open linearly into the cooling elements (4), and/or the feed lines (3) extend linearly between the collecting line (S) and the cooling elements (4).

8. Battery system (1) according to one of the preceding claims, wherein at least one control means (ZV, AV) can be set manually with a constant cooling fluid passage opening during operation, and/or at least one control means (ZV, AV) can be controlled with a variable cooling fluid passage opening during operation.

9. Battery system (1) according to one of the preceding claims, wherein the individual cooling elements (4) are each supplied with cooling fluid from a separate feed line (3) with the result that the individual cooling elements (4) can be supplied with cooling fluid individually and/or independently of one another.

10. Battery system (1) according to one of the preceding claims, wherein in each case a separate discharge line (6) leaves the individual cooling elements (4), with the result that the cooling fluid discharge from the individual cooling elements (4) takes place individually and/or independently of one another.

11. Battery system (1) according to one of the preceding claims, wherein the feed lines (3) and the distributor line (V) and/or the discharge lines (6) and the collecting line (S) are accommodated in a housing which is connected to ground, in order to electrically isolate the cooling module (5) from the battery modules (2).

12. Battery system (1) according to one of the preceding claims, wherein at least one control means (ZV, AV) additionally has an air expelling function, and/or the battery system (1) has an air expelling device.

13. Battery system (1) according to one of the preceding claims, wherein at least one of the following has an attachment device for attachment to a conductor frame (8) of a utility vehicle:
- the housing (7),
- the feed lines (3),
- the distributor line (V),
- the discharge lines (6),
- the collecting line (S), and
- the cooling module (5).

14. Battery system (1) according to one of the preceding claims, wherein the cooling elements (4) are cooling panels and are arranged between the battery modules (2).

15. Motor vehicle, preferably utility vehicle, having a battery system (1) according to one of the preceding claims.

## Revendications

1. Système de batterie (1) pour un véhicule automobile, avec des modules de batteries (2) disposés l'un derrière l'autre, l'un à côté de l'autre et/ou l'un au-dessus de l'autre, de préférence raccordés en parallèle, et
- au moins deux conduites d'arrivée séparées (3) pour amener du fluide de refroidissement à au moins deux éléments de refroidissement (4) pour le refroidissement des modules de batteries (2) et une conduite de répartition (V), qui est raccordée à un module de refroidissement (5) et sert pour l'alimentation des conduites d'arrivée (3) en fluide de refroidissement à partir du module de refroidissement (5), et des moyens de commande (ZV) pour influencer les débits volumiques de fluide de refroidissement vers les éléments de refroidissement (4), et/ou
- au moins deux conduites d'évacuation séparées (6) pour évacuer du fluide de refroidissement hors desdits au moins deux éléments de refroidissement (4) et une conduite de collecte (S), qui est raccordée aux conduites d'évacuation (6) et sert pour collecter le fluide de refroidissement à partir des conduites d'évacuation (6) et pour le retransmettre au module de refroidissement (5), et des moyens de commande (AV) pour influencer les débits volumiques de fluide de refroidissement à partir des éléments de refroidissement (4), et
- au moins un moyen de commande (ZV, AV) est fermé au moyen d'une unité de commande pour commander les moyens de commande (ZV, AV), lorsqu'une fuite de fluide de refroidissement est constatée, de telle manière que du fluide de refroidissement puisse être maintenu dans au moins un élément de refroidissement (4).

2. Système de batterie (1) selon la revendication 1, dans lequel les moyens de commande (ZV) pour influencer les débits volumiques de fluide de refroidissement vers les éléments de refroidissement (4) sont disposés dans les conduites d'arrivée (3) ou dans la conduite de répartition (V).

3. Système de batterie (1) selon la revendication 1 ou 2, dans lequel les moyens de commande (AV) pour influencer les débits volumiques de fluide de refroidissement hors des éléments de refroidissement (4) sont disposés dans les conduites d'évacuation (6) ou dans la conduite de collecte (S).

4. Système de batterie (1) selon l'une quelconque des revendications précédentes, dans lequel les modules de batteries (2) et les éléments de refroidissement (4) sont installés dans un boîtier commun (7) et le boîtier (7) présente de préférence des entrées et des sorties pour les conduites d'arrivée (3) et d'évacuation (6).

5. Système de batterie (1) selon l'une quelconque des revendications précédentes, dans lequel les conduites d'arrivée (3) sont menées en direction des éléments de refroidissement (4) sur le côté tourné vers le module de refroidissement (5) et/ou les conduites d'évacuation (6) sont menées à partir des éléments de refroidissement (4) sur le côté tourné vers le module de refroidissement (5).

6. Système de batterie (1) selon l'une quelconque des revendications précédentes, dans lequel les conduites d'arrivée (3) sont menées vers les éléments de refroidissement (4) sur le côté opposé au module de refroidissement (5) et/ou les conduites d'évacuation (6) sont menées à partir des éléments de refroidissement (4) sur le côté opposé au module de refroidissement (5).

7. Système de batterie (1) selon l'une quelconque des revendications précédentes, dans lequel les conduites d'arrivée (3) débouchent en ligne droite dans les éléments de refroidissement (4) et/ou les conduites d'arrivée (3) s'étendent en ligne droite entre la conduite de collecte (S) et les éléments de refroidissement (4).

8. Système de batterie (1) selon l'une quelconque des revendications précédentes, dans lequel au moins un moyen de commande (ZV, AV) est réglable à la main avec une ouverture de passage de fluide de refroidissement constante pendant le fonctionnement et/ou au moins un moyen de commande (ZV, AV) peut être commandé avec une ouverture de passage de fluide de refroidissement variable pendant le fonctionnement.

9. Système de batterie (1) selon l'une quelconque des revendications précédentes, dans lequel les éléments de refroidissement individuels (4) sont alimentés en fluide de refroidissement respectivement par une conduite d'arrivée (3) particulière, de telle manière que les éléments de refroidissement individuels (4) puissent être alimentés individuellement et/ou indépendamment les uns des autres.

10. Système de batterie (1) selon l'une quelconque des revendications précédentes, dans lequel une conduite d'évacuation particulière (6) part respectivement des éléments de refroidissement individuels (4), de telle manière que l'évacuation de fluide de refroidissement hors des éléments de refroidissement individuels (4) soit effectuée individuellement et/ou indépendamment les uns des autres.

11. Système de batterie (1) selon l'une quelconque des revendications précédentes, dans lequel les conduites d'arrivée (3) et la conduite de répartition (V) et/ou les conduites d'évacuation (6) et la conduite de collecte (S) sont installées dans un boîtier raccordé à la masse, pour assurer la séparation électrique du module de refroidissement (5) et des modules de batteries (2).

12. Système de batterie (1) selon l'une quelconque des revendications précédentes, dans lequel au moins un moyen de commande (ZV, AV) présente en outre une fonction de sortie d'air et/ou le système de batterie (1) présente un dispositif de sortie d'air.

13. Système de batterie (1) selon l'une quelconque des revendications précédentes, dans lequel au moins un des éléments suivants présente un dispositif de fixation pour la fixation à un châssis conducteur (8) d'un véhicule utilitaire:
- le boîtier (7),
- les conduites d'arrivée (3),
- la conduite de répartition (V),
- les conduites d'évacuation (6),
- la conduite de collecte (S),
- le module de refroidissement (5).

14. Système de batterie (1) selon l'une quelconque des revendications précédentes, dans lequel les éléments de refroidissement (4) sont des plaques de refroidissement et sont disposés entre les modules de batteries (2).

15. Véhicule automobile, de préférence véhicule utilitaire, avec un système de batterie (1) selon l'une quelconque des revendications précédentes.
